# EUROPÄISCHE PATENTSCHRIFT

(11) **EP 3 098 137 B1**
(45) Veröffentlichungstag und Bekanntmachung des Hinweises auf die Patenterteilung: **18.07.2018**
(21) Anmeldenummer: 16167267.0
(22) Anmeldetag: 27.04.2016
(51) Int. Cl.: B62D 1/185, F16C 3/03, F16D 3/06

(54) **LÄNGENVERSTELLBARE WELLE FÜR EINE LENKVORRICHTUNG EINES FAHRZEUGS UND LENKVORRICHTUNG FÜR EIN FAHRZEUG**
LENGTH-ADJUSTABLE SHAFT FOR A VEHICLE STEERING DEVICE AND STEERING DEVICE FOR A VEHICLE
ARBRE A LONGUEUR VARIABLE POUR UN DISPOSITIF DE DIRECTION D'UN VEHICULE ET DISPOSITIF DE DIRECTION DE VEHICULE

(30) Priorität: 28.05.2015 DE 102015209768
(43) Veröffentlichungstag der Anmeldung: 30.11.2016
(73) Patentinhaber: Volkswagen Aktiengesellschaft, 38440 Wolfsburg (DE)
(72) Erfinder: Hunkemöller, Ludger, 38116 Braunschweig (DE)

(56) Entgegenhaltungen:
- JP-A- 2010 060 002

## Beschreibung

Die vorliegende Erfindung betrifft eine längenverstellbare Welle für eine Lenkvorrichtung eines Fahrzeugs mit einem Hülsenabschnitt und einem Zapfenabschnitt, wobei der Hülsenabschnitt zum zumindest teilweisen Umfassen des Zapfenabschnitts ausgebildet ist und der Hülsenabschnitt und der Zapfenabschnitt zum Verstellen einer Länge der Welle axial gegeneinander verschiebbar sind, der Hülsenabschnitt aufweisend eine Hülsenverzahnung und der Zapfenabschnitt aufweisend eine Zapfenverzahnung, wobei die Hülsenverzahnung und die Zapfenverzahnung zum Übertragen eines Drehmoments ineinandergreifen, und wobei ferner die Zapfenverzahnung zumindest an einem axialen Ende mit einem Kunststoff umspritzt ist, wobei der umspritzte Kunststoff durch zumindest eine Sicherungsnut in der Zapfenverzahnung gegen eine axiale Verschiebung gesichert ist und die Zapfenverzahnung zumindest eine Fixieraufnahme aufweist, wobei die Fixieraufnahme zwischen der zumindest einen Sicherungsnut und dem mit Kunststoff umspritzten axialen Ende der Zapfenverzahnung angeordnet ist und wobei die Fixieraufnahme mit dem Kunststoff umspritzt ist. Ferner betrifft die Erfindung eine Lenkvorrichtung für ein Fahrzeug, aufweisend eine längenverstellbare Welle

Bei modernen Fahrzeugen ist es bekannt, Lenkvorrichtungen einzusetzen, die eine Anpassung einer Position beispielsweise eines Lenkrads auf verschiedene Benutzer ermöglichen. Dazu ist oftmals auch eine Verstellbarkeit einer Länge einer Lenksäule der Lenkvorrichtung möglich. Diese kann durch eine längsverstellbare Welle als Element der Lenkvorrichtung bereitgestellt werden. Dabei weist eine derartige längenverstellbare Welle zumeist einen Hülsenabschnitt auf, der umfassend um einen Zapfenabschnitt angeordnet ist. Durch eine axiale Verschiebbarkeit dieser Bauteile der Welle gegeneinander kann somit eine Längenverstellbarkeit der Welle bereitgestellt werden. Ineinandergreifende Verzahnungen im Hülsenabschnitt und im Zapfenabschnitt stellen eine Übertragung von Drehmomenten, die durch Lenkbewegungen erzeugt werden, zwischen diesen Bauteilen sicher. Sowohl der Hülsenabschnitt als auch der Zapfenabschnitt sind zumeist aus einem metallischen Werkstoff, beispielsweise Stahl, gefertigt, um eine hohe Stabilität, insbesondere beispielsweise gegen Verwindungen, zu gewährleisten. Um eine möglichst spielfreie Anordnung der beiden Bauteile zu ermöglichen, ohne den Hülsenabschnitt und den Zapfenabschnitt passgenau ausbilden zu müssen, ist es ferner bekannt, eine Kunststoffschicht zwischen den beiden Bauteilen anzuordnen, siehe beispielsweise die EP 2 282 071 A2. Es ist ferner bekannt, die Verzahnung des Zapfenabschnitts in einem Spritzgussverfahren vollständig mit dem Kunststoff zu umspritzen. Eine besonders gute und einfache Abbildung der Verzahnung durch den Kunststoff kann dadurch erreicht werden. Um eine axiale Verschiebung der Kunststoffumspritzung zu verhindern, ist es ferner bekannt, zumindest eine Sicherungsnut nutartig umlaufend in der Verzahnung vorzusehen, die beim Umspritzen mit Kunststoff gefüllt wird.

Als nachteilig hat sich dabei herausgestellt, dass bei sehr niedrigen Temperaturen, insbesondere Temperaturen deutlich unter dem Gefrierpunkt, sich die für eine Längsverstellung der Welle nötige Kraft deutlich erhöhen kann. Dies kann insbesondere darauf zurückgeführt werden, dass sich das Metallmaterial des Zapfenabschnitts und das Kunststoffmaterial bei Kälteeinwirkung zusammenzieht, wobei der Längenausdehnungskoeffizient des Kunststoffmaterials größer ist als der des Metallmaterials. Die Kunststoffumspritzung zieht sich somit stärker zusammen als der Zapfenabschnitt. Die Enden der Kunststoffumspritzung, die bei höheren Temperaturen axial ein wenig über die Verzahnung hinausgehen, werden dadurch auf die Verzahnung gezogen, wodurch sich lokal eine radiale Vergrößerung des umspritzten Zapfenabschnitts ergibt. Diese radiale Vergrößerung wird jedoch durch den Hülsenabschnitt begrenzt, wodurch hohe Reibungskräfte bei einer Verstellung der Länge der Welle entstehen. Darüber hinaus können durch diese Vorgänge auch Risse im Kunststoff entstehen, wodurch die Festigkeit und Haltbarkeit des Kunststoffs und damit der gesamten Welle vermindert werden kann.

Um dieses Problem zu umgehen, ist es gemäß dem Stand der Technik bekannt, den Kunststoff als separates Bauteil herzustellen und auf einen Zapfenabschnitt, insbesondere auf einen Zapfenabschnitt ohne Verzahnung, aufzustecken. Eine Längenkontraktion dieser Kunststoffhülse führt zu keiner Veränderung des Radius. Nachteilig hierbei ist insbesondere, dass eine präzise Verzahnung im Kunststoff, die insbesondere nur sehr geringe Toleranzen aufweist, in einem zusätzlichen Arbeitsschritt durch Kalibrieren erzeugt werden muss. Eine derartige nur im Kunststoff vorhandene Verzahnung weist jedoch zusätzlich auch eine geringere Steifigkeit als eine Verzahnung auf, die zumindest teilweise aus einem Metallmaterial besteht. Außerdem muss der Kunststoff durch weitere Bauteile axial am Zapfenabschnitt gegen ein Verschieben gesichert werden. Eine weitere gemäß dem Stand der Technik bekannte Möglichkeit besteht darin, eine Verzahnung auf dem Zapfenabschnitt mit einer dünnen Kunststoffschicht zu besprühen. Dadurch wird der Kunststoff über die gesamte Länge auf die Verzahnung geklebt. Durch diese flächige Verklebung können Verschiebungen des Kunststoffs gegenüber der Verzahnung, auch bei Temperaturänderungen, verhindert werden. Als nachteilig hat sich dabei herausgestellt, dass auch bei dieser Methode eine nachträgliche Bearbeitung der Verzahnung notwendig ist, um Ungleichmäßigkeiten in einer Dicke des Kunststoffs zu beheben.

Darüber hinaus benötigt ein derart aufgesprühter Kunststoff eine lange Trocknungszeit, um vollständig auszuhärten.

Die JP 2010 060002 A beschreibt eine längenverstellbare Welle einer Lenkvorrichtung mit einem Hülsen- und Zapfenabschnitt, die zum Übertragen eines Drehmoments ineinandergreifen und gegeneinander axial verschiebbar ausgebildet sind. Der Zapfenabschnitt verfügt über eine Verzahnungen, die mit Kunststoff umspritzt sind. Diese Verzahnung weist Sicherungsnuten und Fixieraufnahmen auf, um eine axiale Verschiebung des Kunststoff zu verhindern.

Es ist daher Aufgabe der vorliegenden Erfindung, die voranstehend beschriebenen Nachteile zumindest teilweise zu beheben. Insbesondere ist es Aufgabe der Erfindung, eine längenverstellbare Welle für eine Lenkvorrichtung eines Fahrzeugs sowie eine Lenkvorrichtung für ein Fahrzeug zu schaffen, die in besonders einfacher und kostengünstiger Weise eine Längenverstellung der Welle verbessern, wobei insbesondere die Verstellung mit im Wesentlichen gleichbleibender Kraft auch bei wechselnden Temperaturen ermöglicht und die Haltbarkeit der Welle erhöht wird.

Voranstehende Aufgabe wird gelöst durch eine längenverstellbare Welle für eine Lenkvorrichtung eines Fahrzeugs mit den Merkmalen des unabhängigen Anspruchs 1. Ferner wird die Aufgabe gelöst durch eine Lenkvorrichtung für ein Fahrzeug mit den Merkmalen des nebengeordneten Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen längenverstellbaren Welle beschrieben sind, selbstverständlich auch im Zusammenhang mit der erfindungsgemäßen Lenkvorrichtung sowie dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine längenverstellbare Welle für eine Lenkvorrichtung eines Fahrzeugs mit einem Hülsenabschnitt und einem Zapfenabschnitt, wobei der Hülsenabschnitt zum zumindest teilweisen Umfassen des Zapfenabschnitts ausgebildet ist und der Hülsenabschnitt und der Zapfenabschnitt zum Verstellen einer Länge der Welle axial gegeneinander verschiebbar sind, der Hülsenabschnitt aufweisend eine Hülsenverzahnung und der Zapfenabschnitt aufweisend eine Zapfenverzahnung, wobei die Hülsenverzahnung und die Zapfenverzahnung zum Übertragen eines Drehmoments ineinandergreifen, und wobei ferner die Zapfenverzahnung zumindest an einem axialen Ende mit einem Kunststoff umspritzt ist, wobei der umspritzte Kunststoff durch zumindest eine Sicherungsnut in der Zapfenverzahnung gegen eine axiale Verschiebung gesichert ist und die Zapfenverzahnung zumindest eine Fixieraufnahme aufweist, wobei die Fixieraufnahme zwischen der zumindest einen Sicherungsnut und dem mit Kunststoff umspritzten axialen Ende (24) der Zapfenverzahnung angeordnet ist und wobei die Fixieraufnahme mit dem Kunststoff (30) umspritzt ist. Eine erfindungsgemäße längenverstellbare Welle ist dadurch gekennzeichnet, dass die Zapfenverzahnung an zumindest einem axialen Ende eine Hinterschneidung aufweist, wobei die zumindest eine Hinterschneidung mit Kunststoff umspritzt ist.

Eine erfindungsgemäße längenverstellbare Welle ist insbesondere für eine Lenkvorrichtung eines Fahrzeugs vorgesehen. Dabei weist eine erfindungsgemäße Welle insbesondere einen Hülsenabschnitt auf, der zum zumindest teilweisen Umfassen eines Zapfenabschnitts ausgebildet ist. Dies bedeutet insbesondere, dass der Zapfenabschnitt zumindest teilweise vollständig im Inneren des Hülsenabschnitts angeordnet ist. Der Hülsenabschnitt und der Zapfenabschnitt können bevorzugt aus einem Metallmaterial, beispielsweise Stahl, gefertigt sein, wodurch eine hohe Stabilität und Verwindungssteifigkeit in den Bauteilen erreicht werden kann. Die beiden Abschnitte sind ferner axial gegeneinander verschiebbar, wodurch eine Längenverstellung der Welle ermöglicht wird. Bevorzugt können dafür der Hülsenabschnitt und der Zapfenabschnitt koaxial ausgebildet sein. Eine besonders gute Übertragung von Drehmomenten, insbesondere von durch Lenkbewegungen erzeugten Drehmomenten, können durch korrespondierende Verzahnungen, einer Hülsenverzahnung am Hülsenabschnitt und einer Zapfenverzahnung am Zapfenabschnitt ermöglicht werden. Die einzelnen Zähne der Verzahnungen greifen dabei ineinander und bewirken so die gute und unmittelbare Übertragung eines Drehmoments. Die Verzahnungen können beispielsweise ein Kleeblattprofil aufweisen. Die Zapfenverzahnung ist ferner zumindest teilweise mit einem Kunststoff, beispielsweise Polyoxymethylen (POM) umspritzt. Zumindest teilweise bedeutet insbesondere, dass ein Ende der Zapfenverzahnung mit dem Kunststoff umspritzt ist. Durch die Umspritzung mit Kunststoff kann insbesondere eine möglichst spielfreie Anordnung des Hülsenabschnitts und des Zapfenabschnitts ermöglicht werden, ohne diese passgenau ausbilden zu müssen. Dabei ist die Kunststoffumspritzung der Zapfenverzahnung auch an die Hülsenverzahnung angepasst. Bei einer Längenverstellung der Welle werden wie oben beschrieben der Zapfenabschnitt und der Hülsenabschnitt axial gegeneinander verschoben. Um eine Verschiebung des Kunststoffs relativ zum Zapfenabschnitt zu verhindern, weist die Zapfenverzahnung zumindest eine Sicherungsnut auf. Bevorzugt sind oftmals zwei Sicherungsnuten vorhanden. Diese Sicherungsnuten sind umlaufend nutartig ausgebildet und bilden so Vertiefungen in der Zapfenverzahnung. Während des Umspritzungsvorgangs werden die Sicherungsnuten mit Kunststoff gefüllt. Der Kunststoff in den Sicherungsnuten bildet dadurch mit der Zapfenverzahnung einen Formschluss in axialer Richtung, wodurch eine axiale Verschiebung des Kunststoffs bei einer Längenverstellung der Welle verhindert werden kann. Selbstverständlich kann auch alternativ oder zusätzlich die Verzahnung des Hülsenabschnitts zumindest teilweise mit einem Kunststoff umspritzt sein, wodurch dieselben Eigenschaften und Vorteile erreicht werden können. Im Folgenden wird ohne Einschränkung nur auf eine Umspritzung des Zapfenabschnitts eingegangen, da diese einfacher, kostengünstiger und dadurch wirtschaftlicher erfolgen kann.

Die Zapfenverzahnung weist an zumindest einem axialen Ende eine Hinterschneidung auf, wobei die zumindest eine Hinterschneidung mit Kunststoff umspritzt ist. Eine Hinterschneidung ist ein Rücksprung der Zapfenverzahnung am Ende der Zapfenverzahnung gegenüber dem restlichen Zapfenabschnitt. Ein radial weiter außen gelegener Teil der Zapfenverzahnung weist somit eine größere axiale Ausdehnung als ein dazu benachbart und radial weiter innen angeordneter Teil der Zapfenverzahnung. Eine derartige Hinterschneidung kann beispielsweise durch eine Bearbeitung der Zapfenverzahnung, insbesondere eine spanende Bearbeitung der Zapfenverzahnung, erzeugt werden. Bei einer Umspritzung der Hinterschneidung mit Kunststoff bildet dieser Kunststoff somit einen Vorsprung aus, der in der Hinterschneidung formschlüssig anliegt. Bei tiefen Temperaturen kann durch dieses formschlüssige Anliegen eine durch eine Längenkontraktion bedingte axiale Bewegung des Kunststoffs besonders einfach verhindert werden. Die mit einer derartigen Längenkontraktion des Kunststoffs verbundenen Nachteile können dadurch vermieden werden.

Erfindungsgemäß ist bei einer längenverstellbaren Welle vorgesehen, dass zusätzlich zur Sicherungsnut in der Zapfenverzahnung zumindest eine Fixieraufnahme vorgesehen ist. Eine derartige Fixieraufnahme kann beispielsweise als eine Vertiefung in der Zapfenverzahnung ausgebildet sein. Erfindungswesentlich ist, dass die Fixieraufnahme zwischen der zumindest einen Sicherungsnut und dem umspritzten Ende der Zapfenverzahnung angeordnet ist. Ferner ist erfindungswesentlich, dass beim Umspritzen auch die Fixieraufnahme mit dem Kunststoff umspritzt ist. Eine Vergrößerung des Radius des umspritzten Zapfenabschnitts bei niedrigen Temperaturen, insbesondere Temperaturen deutlich unter dem Gefrierpunkt, wird wie oben beschrieben durch einen Unterschied der Längenkontraktionen des Kunststoffmaterials und des Materials des Zapfenabschnitts bewirkt. Das Kunststoffmaterial zieht sich mehr zusammen und ein Ende der Kunststoffumspritzung, das ohne Längenkontraktion über ein Ende der Zapfenverzahnung hinausreicht, wird auf die Zapfenverzahnung gezogen. Dadurch ergibt sich automatisch eine Vergrößerung des Radius des umspritzten Zapfenabschnitts, wodurch hohe Reibungskräfte beim Verstellen einer Länge der Welle überwunden werden müssen. Dabei ist eine Größe der Längenkontraktion eines Bauteils insbesondere abhängig von der Temperatur und einer freien Länge des sich zusammenziehenden Bauteils. Für die Kunststoffumspritzung wird bei Ausgestaltungen gemäß dem Stand der Technik diese freie Länge durch den Abstand zwischen der Sicherungsnut und dem Ende der Kunststoffumspritzung bestimmt. Durch eine Fixieraufnahme, die zwischen der zumindest einen Sicherungsnut und dem umspritzten Ende der Zapfenverzahnung angeordnet ist, kann somit diese freie Länge deutlich verkürzt werden. Insbesondere kann die freie Länge derart verkürzt werden, dass die Längenkontraktion des Kunststoffs auch bei tiefen Temperaturen nicht ausreicht, um ein Ende der Kunststoffumspritzung auf ein Ende der Zapfenverzahnung zu ziehen. Eine Vergrößerung des Radius des umspritzten Zapfenabschnitts und die damit verbundenen Reibungskräfte können so sicher vermieden werden. Es hat sich darüber hinaus herausgestellt, dass auch die Bildung von Rissen im Kunststoff insbesondere von der oben beschriebenen freien Länge abhängt. Durch eine Verkürzung dieser freien Länge durch eine Anordnung von zumindest einer Fixieraufnahme in der Zapfenverzahnung kann somit auch die Bildung von Rissen im Kunststoff vermieden oder zumindest deutlich vermindert werden. Die Haltbarkeit und damit die Lebensdauer einer erfindungsgemäßen längenverstellbaren Welle kann dadurch erhöht werden.

Ferner kann bevorzugt bei einer erfindungsgemäßen längenverstellbaren Welle vorgesehen sein, dass beide axialen Enden der Zapfenverzahnung mit dem Kunststoff umspritzt sind und dass die Zapfenverzahnung zumindest zwei Fixieraufnahmen aufweist, wobei die Fixieraufnahmen jeweils zwischen der zumindest einen Sicherungsnut und einem der mit Kunststoff umspritzten axialen Enden der Zapfenverzahnung angeordnet sind, wobei die Fixieraufnahmen mit dem Kunststoff umspritzt sind. Um eine möglichst gute Drehmomentübertragung zwischen dem Zapfenabschnitt und dem Hülsenabschnitt sicherzustellen, ist es vorteilhaft, die gesamte Zapfenverzahnung mit Kunststoff zu umspritzen. Durch ein erfindungsgemäßes Anordnen von Fixieraufnahmen an beiden Enden der Zapfenverzahnung, wobei jeweils die Fixieraufnahme zwischen einer Sicherungsnut und dem der jeweiligen Sicherungsnut benachbarten Ende der Zapfenverzahnung angeordnet ist, kann an beiden Enden der Zapfenverzahnung eine Vergrößerung des Radius des umspritzten Zapfenabschnitts verhindert werden. Sämtliche bereits für ein axiales Ende der Zapfenverzahnung mit einer Fixieraufnahme beschriebenen Vorteile ergeben sich selbstverständlich auch für das zweite axiale Ende der Zapfenverzahnung, sobald dieses ebenfalls mit Kunststoff umspritzt und mit einer Fixieraufnahme ausgebildet ist. Eine besonders gute Längenverstellbarkeit der Welle, insbesondere im Wesentlichen unabhängig von einer Temperatur, und eine hohe Haltbarkeit der Welle kann dadurch bereitgestellt werden.

Auch kann eine erfindungsgemäße längenverstellbare Welle dahingehend ausgebildet sein, dass die Zapfenverzahnung drei oder mehr, bevorzugt sechs, besonders bevorzugt vier, Fixieraufnahmen aufweist. Durch drei oder mehr Zapfenverzahnungen können eine freie Länge und die damit wie oben beschrieben einhergehenden Folgen, noch weiter verkleinert werden.

Die Fixieraufnahmen können beispielsweise axial, insbesondere gleichmäßig, über die Zapfenverzahnung verteilt angeordnet sein. Es hat sich herausgestellt, dass mit sechs Fixieraufnahmen eine Längenverstellbarkeit einer erfindungsgemäßen Welle bereitgestellt werden kann, die mit einer noch größeren Anzahl an Fixieraufnahmen nur noch unwesentlich gesteigert werden kann. Da darüber hinaus für jede Fixieraufnahme eine Bearbeitung der Zapfenverzahnung nötig ist, hat sich eine Anzahl von vier Fixieraufnahmen als besonders bevorzugt hinsichtlich einer Verbesserung einer Längenverstellbarkeit und Haltbarkeit einer erfindungsgemäßen Welle unter Berücksichtigung von Aspekten der Wirtschaftlichkeit herausgestellt.

Besonders bevorzugt kann bei einer erfindungsgemäßen längenverstellbaren Welle vorgesehen sein, dass die zumindest eine Fixieraufnahme umlaufend, insbesondere nutartig umlaufend, ausgebildet ist. Durch eine umlaufende, insbesondere nutartig umlaufende, Fixieraufnahme kann eine Fixierung des Kunststoffs über den gesamten Umfang der Zapfenverzahnung und damit des Zapfenabschnitts ermöglicht werden. Die freie Länge des Kunststoffs kann somit nicht länger sein als der Abstand der umlaufenden Fixieraufnahme zum Ende der Zapfenverzahnung. Auch eine nur in einem Sektor des Zapfenabschnitts auftretende Vergrößerung des Radius kann so auf besonders einfache Art und Weise verhindert werden.

Auch kann eine erfindungsgemäße längenverstellbare Welle dahingehend ausgebildet sein, dass eine axiale Ausdehnung der Fixieraufnahmen kleiner ist als eine axiale Ausdehnung der zumindest einen Sicherungsnut. Die zumindest eine Sicherungsnut ist zum Sichern einer axialen Position des Kunststoffs bei einer Längenverstellung der Welle vorgesehen. Um die bei einer derartigen Längenverstellung auftretenden großen Kräfte sicher aufnehmen zu können, muss die Sicherungsnut daher ausreichend dimensioniert ausgebildet sein. Die Kräfte, die auf eine Fixieraufnahme wirken, können jedoch deutlich kleiner sein. Daher können auch die Fixieraufnahmen in axialer Richtung kleiner ausgebildet sein, als die Sicherungsnut. Dies ist insbesondere auch deshalb vorteilhaft, da dadurch ein Aufwand bei der Bearbeitung der Zapfenverzahnung verringert werden kann und ferner auch eine Schwächung der Zapfenverzahnung durch zu große Fixieraufnahmen vermieden werden kann.

Ferner kann bei einer erfindungsgemäßen längenverstellbaren Welle vorgesehen sein, dass ein Fixierabstand der zumindest einen Fixieraufnahme vom nächsten axialen Ende der Zapfenverzahnung kleiner als circa die Hälfte, bevorzugt kleiner als circa ein Viertel, als ein Sicherungsabstand der nächsten Sicherungsnut zu diesem axialen Ende der Zapfenverzahnung ist. Bei einer längenverstellbaren Welle, die gemäß dem Stand der Technik ausgebildet ist, ist die freie Länge, die bei einer Kälteeinwirkung direkt die mögliche Längenkontraktion des Kunststoffs beeinflusst, im Wesentlichen durch den Sicherungsabstand bestimmt. Bei einer erfindungsgemäßen längenverstellbaren Welle ist diese freie Länge jedoch im Wesentlichen durch den Fixierabstand festgelegt. Durch einen Fixierabstand, der kleiner als circa die Hälfte, bevorzugt kleiner als circa ein Viertel, des Sicherungsabstandes ist, kann somit auch die Längenkontraktion des Kunststoffs und die damit verbundenen Nachteile auf besonders einfache Art und Weise deutlich vermindert werden.

Alternativ und/oder zusätzlich kann eine erfindungsgemäße längenverstellbare Welle dahingehend ausgebildet sein, dass ein Fixierabstand der zumindest einen Fixieraufnahme vom nächsten axialen Ende der Zapfenverzahnung kleiner als circa 15 mm, bevorzugt kleiner als circa 10 mm, besonders bevorzugt kleiner als circa 5 mm, ist. Zumindest näherungsweise hängt eine absolute Längenkontraktion des Kunststoffs, mit dem die Zapfenverzahnung umspritzt ist, bei einer Temperaturerniedrigung linear von der vorhandenen freien Länge ab. Diese freie Länge wird wiederum vom Abstand der Fixieraufnahme zum nächsten axialen Ende der Zapfenverzahnung und damit vom Fixierabstand bestimmt. Durch einen Fixierabstand, der einen kleinen absoluten Wert, beispielsweise kleiner als circa 15 mm, bevorzugt kleiner als circa 10 mm, besonders bevorzugt kleiner als circa 5 mm, aufweist, kann somit ebenfalls auf besonders einfache Art und Weise eine Längenkontraktion auf einen kleinen, insbesondere unbedeutend kleinen, Wert beschränkt werden. Die mit einer großen Längenkontraktion des Kunststoffs verbundenen Nachteile können so vermieden oder zumindest deutlich verkleinert werden.

Besonders bevorzugt kann eine erfindungsgemäße längenverstellbare Welle dahingehend weiterentwickelt sein, dass die zumindest eine Hinterschneidung mit einer Achse des Zapfenabschnitts einen Winkel zwischen circa 30° und 45° bildet. Dabei kann insbesondere vorgesehen sein, dass die Hinterschneidung einen im Wesentlichen dreieckigen Querschnitt aufweist, wobei zwei Seiten des Dreiecks durch Material des Zapfenabschnitts bzw. der Zapfenverzahnung gebildet werden. Als Winkel zwischen der Hinterschneidung und der Achse des Zapfenabschnitts kann dann der Winkel zwischen diesen beiden Seiten angenommen werden. Durch einen Winkel zwischen der Hinterschneidung und der Achse des Zapfenabschnitts zwischen circa 30° und circa 45° kann insbesondere sichergestellt werden, dass die verbleibende Zapfenverzahnung zum einen nicht zu spitz ausläuft, wodurch eine Schwächung des Endes der Zapfenverzahnung einhergehen könnte. Zum anderen kann dadurch erreicht werden, dass die Hinterschneidung eine Größe aufweist, durch die ein sicherer Formschluss des Kunststoffs in der Hinterschneidung auch bei einer Zugbelastung durch eine Längenkontraktion des Kunststoffs bei niedrigen Temperaturen sichergestellt werden kann.

Gemäß einem zweiten Aspekt der Erfindung wird die Aufgabe gelöst durch eine Lenkvorrichtung für ein Fahrzeug, aufweisend eine längenverstellbare Welle. Eine erfindungsgemäße Lenkvorrichtung ist dadurch gekennzeichnet, dass die längenverstellbare Welle gemäß dem ersten Aspekt der Erfindung ausgebildet ist. Dementsprechend bringt eine erfindungsgemäße Lenkvorrichtung die gleichen Vorteile mit sich, wie sie ausführlich mit Bezug auf eine erfindungsgemäße längenverstellbare Welle gemäß dem ersten Aspekt der Erfindung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Elemente mit gleicher Funktion und Wirkungsweise sind in den einzelnen Figuren mit denselben Bezugszeichen versehen. Es zeigen schematisch:
Fig. 1 eine erste Ausgestaltungsform einer nicht erfindungsgemäßen längenverstellbaren Welle,
Fig. 2 eine zweite Ausgestaltungsform einer nicht erfindungsgemäßen längenverstellbaren Welle,
Fig. 3 eine Schnittansicht einer Hinterschneidung einer dritten Ausgestaltungsform einer erfindungsgemäßen längenverstellbaren Welle, und
Fig. 4 ein Fahrzeug mit einer erfindungsgemäßen Lenkvorrichtung.

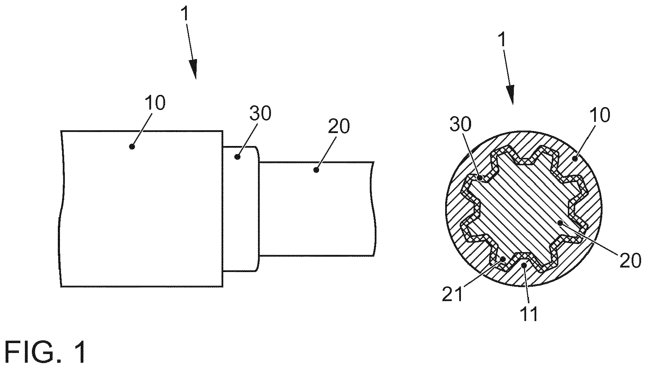

In Fig. 1 ist eine mögliche Ausgestaltungsform einer nicht erfindungsgemäßen längenverstellbaren Welle 1 gezeigt. Die Welle 1 kann insbesondere für einen Einsatz in einer Lenkvorrichtung 50 eines Fahrzeugs 60 (nicht mit abgebildet) vorgesehen sein. Dabei ist im linken Teil der Fig. 1 eine Draufsicht und im rechten Teil ein Schnittbild der Welle 1 abgebildet. Die Welle 1 weist insbesondere einen Hülsenabschnitt 10 und einen Zapfenabschnitt 20 auf. Der Hülsenabschnitt 10 und der Zapfenabschnitt 20 sind bevorzugt aus einem Metallmaterial, beispielsweise aus Stahl, ausgebildet. Deutlich erkennbar ist, dass der Hülsenabschnitt 10 und der Zapfenabschnitt 20 koaxial zueinander angeordnet sind, wobei der Hülsenabschnitt 10 den Zapfenabschnitt 20 zumindest teilweise umfasst. Für eine Längenverstellung der Welle 1 können der Hülsenabschnitt 10 und der Zapfenabschnitt 20 axial gegeneinander verschoben werden. Insbesondere in der rechten Abbildung sind eine Hülsenverzahnung 11 und eine Zapfenverzahnung 21 erkennbar, von denen jeweils beispielhaft ein Zahn mit einem Bezugszeichen versehen ist. Durch das Ineinandergreifen der Hülsenverzahnung 11 und der Zapfenverzahnung 21 kann eine zuverlässige Übertragung eines Drehmoments zwischen dem Hülsenabschnitt 10 und dem Zapfenabschnitt 20 sichergestellt werden. Um eine möglichst spielfreie Anordnung der Hülsenverzahnung 11 und der Zapfenverzahnung 21 zueinander zu ermöglichen, ist die Zapfenverzahnung 21 mit einem Kunststoff 30 umspritzt. Dadurch können Probleme, wie beispielsweise ein Verkanten oder Verkeilen bei einer Temperaturänderung, die bei einer passgenauen Ausbildung der Hülsenverzahnung 11 und der Zapfenverzahnung 21 auftreten könnten, sicher vermieden werden.

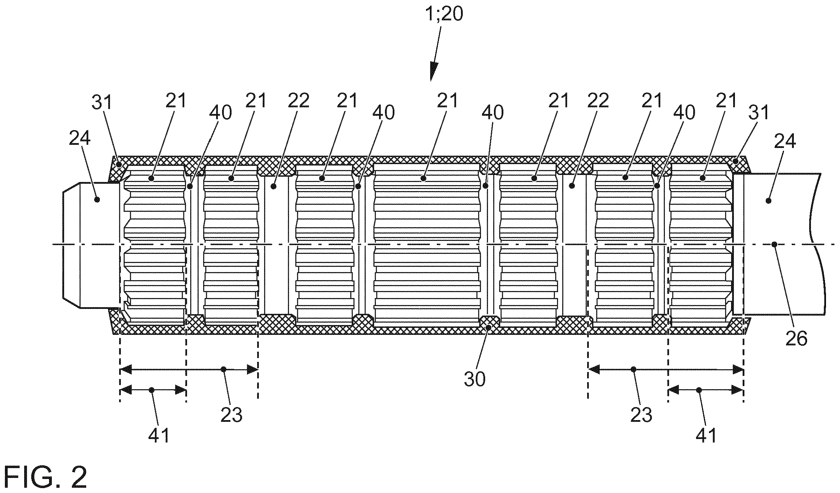

Fig. 2 zeigt eine weitere Ausgestaltungsform einer Welle 1, insbesondere des Zapfenabschnitts 20 einer Welle 1. Dabei ist ein Endabschnitt des Zapfenabschnitts 20 in einer Seitenansicht und der an die Zapfenverzahnung 21 des Zapfenabschnitts 20 angespritzte Kunststoff 30 in einer Schnittansicht gezeigt. Bei einer Verstellung der Länge der Welle 1 werden der Zapfenabschnitt 20 und der Hülsenabschnitt 10 (nicht mit abgebildet) axial und damit parallel zur Achse 26 gegeneinander verschoben. Um eine dadurch hervorgerufene Verschiebung des Kunststoffs 30 relativ zur Zapfenverzahnung 21 zu verhindern, weist die Zapfenverzahnung 21 zwei ausreichend groß dimensionierte Sicherungsnuten 22 auf. Diese Sicherungsnuten 22 werden beim Umspritzen mit Kunststoff 30 gefüllt und durch den so gebildeten Formschluss zwischen dem Kunststoff 30 und den Seitenwänden der Sicherungsnuten 22 kann ein axiales Verschieben des Kunststoffs 30 sicher verhindert werden. Bei tiefen Temperaturen 61 (nicht mit abgebildet), insbesondere Temperaturen weit unter dem Gefrierpunkt, kann es jedoch zu einer axialen Längenkontraktion des Kunststoffs 30 kommen, die eine axiale Längenkontraktion des Zapfenabschnitts 20 bzw. der Zapfenverzahnung 21 deutlich übertrifft. Eine derartige Längenkontraktion ist neben einer Temperaturdifferenz im Wesentlichen direkt abhängig von einer freien Länge des Materials. Bei einem Zapfenabschnitt 20, der nur Sicherungsnuten 22 aufweist, ist dies beispielsweise ein Sicherungsabstand 23, der sich von der jeweiligen Sicherungsnut 22 bis zum Ende 24 der Zapfenverzahnung 21 erstreckt. Dadurch kann es bei sehr niedrigen Temperaturen 61 zu einer relativ großen Längenkontraktion des Kunststoffs 30 kommen, wodurch ein Ende 31 des Kunststoffs 30 über ein Ende 24 der Zapfenverzahnung 21 gezogen werden kann (nicht mit abgebildet). Eine Vergrößerung eines Radius des umspritzten Zapfenabschnitts 20 kann die Folge sein. Damit treten jedoch bei einer Längenverstellung der Welle 1 erhöhte Reibungskräfte zwischen dem Zapfenabschnitt 20 und dem Hülsenabschnitt 10 auf, die die Längenverstellung erschweren oder sogar gänzlich verhindern können. Es ist daher vorgesehen, dass in der Zapfenverzahnung 21 mehrere Fixieraufnahmen 40 angeordnet sind. Die Fixieraufnahmen 40 sind nutartig umlaufend ausgebildet. Durch diese Fixieraufnahmen 40, insbesondere den beiden Fixieraufnahmen 40, die benachbart zu den Enden 24, 31 der Zapfenverzahnung 21 und des Kunststoffs 30 angeordnet sind, kann es ermöglicht werden, die oben beschriebene freie Länge deutlich zu verkürzen, insbesondere auf einen Fixierabstand 41 zu verkürzen. Der Fixierabstand 41 ist der Abstand einer Fixieraufnahme 40 zum Ende 24 der Zapfenverzahnung 21. Durch diese im Vergleich zum Stand der Technik deutlich kürzere freie Länge kann erreicht werden, dass eine durch eine niedrige Temperatur 61 bedingte Längenkontraktion nicht mehr ausreicht, um ein Ende 31 des Kunststoffs 30 über ein Ende 24 der Zapfenverzahnung 21 zu ziehen. Eine Vergrößerung eines Radius des mit Kunststoff 30 umspritzten Zapfenabschnitts 20 und die dadurch, wie oben beschrieben, verursachten Nachteile können somit sicher vermieden werden.

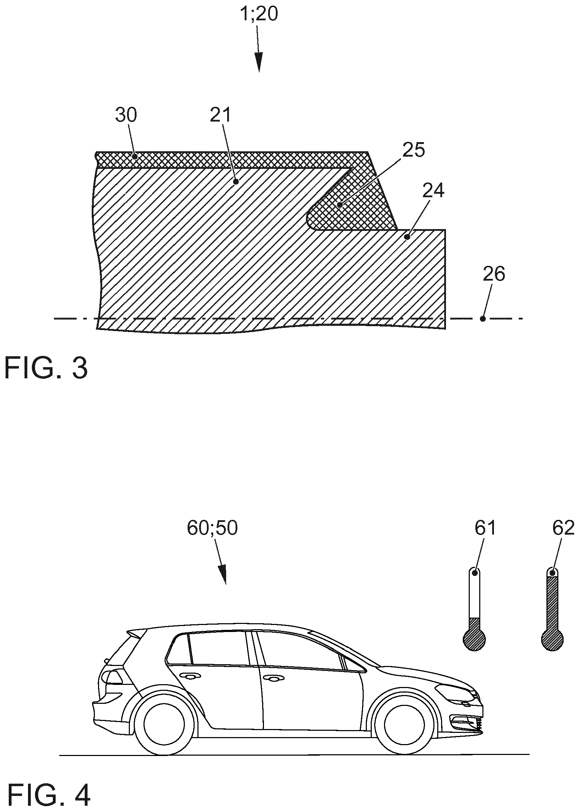

Fig. 3 zeigt einen Zapfenabschnitt 20 einer erfindungsgemäßen Welle 1. Dabei weist die Zapfenverzahnung 21 hier an ihrem Ende 24 eine Hinterschneidung 25 auf. In der abgebildeten Ausgestaltungsform ist die Hinterschneidung 25 im Wesentlichen dreieckig ausgebildet, wobei von den beiden Seiten des Dreiecks, die durch Material des Zapfenabschnitts 20 gebildet sind, eine parallel zu einer Achse 26 des Zapfenabschnitts 20 und die andere in einem Winkel zwischen circa 30° und circa 45° angeordnet ist. Dadurch kann ein Kunststoff 30, der beim Umspritzen der Zapfenverzahnung 21 in der Hinterschneidung 25 angeordnet ist, einen festen Formschluss mit der Hinterschneidung 25 bilden. Bei einer temperaturbedingten Längenkontraktion des Kunststoffs 30, die zumindest im Wesentlichen parallel zur Achse 26 erfolgt, wird der Kunststoff sicher gehalten. Durch eine derartige Hinterschneidung 25 kann somit eine Vergrößerung des Radius des umspritzten Zapfenabschnitts 20 zusätzlich zu einer entsprechend angeordneten Fixieraufnahme 40 (nicht mit abgebildet), noch sicherer verhindert werden.

In Fig. 4 ist ein Fahrzeug 60 abgebildet, in dem eine erfindungsgemäße Lenkvorrichtung 50 verbaut ist. Dadurch ist in diesem Fahrzeug 60 selbstverständlich auch eine erfindungsgemäße längenverstellbare Welle 1 verbaut, deren Ausgestaltungsform beispielsweise in Fig. 3 beschrieben worden ist. Insbesondere kann dadurch bei dem abgebildeten Fahrzeug 60 sichergestellt werden, dass sowohl bei tiefen 61 als auch bei hohen Temperaturen 62 eine Verstellbarkeit der Länge der Welle 1 möglich ist, insbesondere ohne Einschränkungen möglich ist. Eine Verbesserung des Komforts für den Benutzer des Fahrzeugs 60, insbesondere beispielsweise durch die Möglichkeit, die Lenkung an die Bedürfnisse des jeweiligen Benutzers anzupassen, kann dadurch bereitgestellt werden.

### Bezugszeichenliste

- 1: Welle

- 10: Hülsenabschnitt
- 11: Hülsenverzahnung

- 20: Zapfenabschnitt
- 21: Zapfenverzahnung
- 22: Sicherungsnut
- 23: Sicherungsabstand
- 24: Ende der Zapfenverzahnung
- 25: Hinterschneidung
- 26: Achse

- 30: Kunststoff
- 31: Ende des Kunststoffs

- 40: Fixieraufnahme
- 41: Fixierabstand

- 50: Lenkvorrichtung

- 60: Fahrzeug
- 61: Tiefe Temperatur
- 62: Hohe Temperatur

## Patentansprüche

1. Längenverstellbare Welle (1) für eine Lenkvorrichtung (50) eines Fahrzeugs (60) mit einem Hülsenabschnitt (10) und einem Zapfenabschnitt (20), wobei der Hülsenabschnitt (10) zum zumindest teilweisen Umfassen des Zapfenabschnitts (20) ausgebildet ist und der Hülsenabschnitt (10) und der Zapfenabschnitt (20) zum Verstellen einer Länge der Welle (1) axial gegeneinander verschiebbar sind, der Hülsenabschnitt (10) aufweisend eine Hülsenverzahnung (11) und der Zapfenabschnitt (20) aufweisend eine Zapfenverzahnung (21), wobei die Hülsenverzahnung (11) und die Zapfenverzahnung (21) zum Übertragen eines Drehmoments ineinandergreifen, und wobei ferner die Zapfenverzahnung (21) zumindest an einem axialen Ende (24) mit einem Kunststoff (30) umspritzt ist, wobei der umspritzte Kunststoff (30) durch zumindest eine Sicherungsnut (22) in der Zapfenverzahnung (21) gegen eine axiale Verschiebung gesichert ist und
die Zapfenverzahnung (21) zumindest eine Fixieraufnahme (40) aufweist, wobei die Fixieraufnahme (40) zwischen der zumindest einen Sicherungsnut (22) und dem mit Kunststoff umspritzten axialen Ende (24) der Zapfenverzahnung (21) angeordnet ist und wobei die Fixieraufnahme (40) mit dem Kunststoff (30) umspritzt ist **dadurch gekennzeichnet,**
**dass** die Zapfenverzahnung (21) an zumindest einem axialen Ende (24) eine Hinterschneidung (25) aufweist, wobei die zumindest eine Hinterschneidung (25) mit Kunststoff (30) umspritzt ist.

2. Längenverstellbare Welle (1) nach Anspruch 1,
**dadurch gekennzeichnet,**
**dass** beide axialen Enden (24) der Zapfenverzahnung (21) mit dem Kunststoff (30) umspritzt sind und dass die Zapfenverzahnung (21) zumindest zwei Fixieraufnahmen (40) aufweist, wobei die Fixieraufnahmen (40) jeweils zwischen der zumindest einen Sicherungsnut (22) und einem der mit Kunststoff umspritzten axialen Enden (24) der Zapfenverzahnung (21) angeordnet sind, wobei die Fixieraufnahmen (40) mit dem Kunststoff (30) umspritzt sind.

3. Längenverstellbare Welle (1) nach Anspruch 1 oder 2,
**dadurch gekennzeichnet,**
**dass** die Zapfenverzahnung (21) drei oder mehr, bevorzugt sechs, besonders bevorzugt vier, Fixieraufnahmen (40) aufweist.

4. Längenverstellbare Welle (1) nach einem der vorangegangenen Ansprüche,
**dadurch gekennzeichnet,**
**dass** die zumindest eine Fixieraufnahme (40) umlaufend, insbesondere nutartig umlaufend, ausgebildet ist.

5. Längenverstellbare Welle (1) nach einem der vorangegangenen Ansprüche,
**dadurch gekennzeichnet,**
**dass** eine axiale Ausdehnung der Fixieraufnahmen (40) kleiner ist als eine axiale Ausdehnung der zumindest einen Sicherungsnut (22).

6. Längenverstellbare Welle (1) nach einem der vorangegangenen Ansprüche,
**dadurch gekennzeichnet,**
**dass** ein Fixierabstand (41) der zumindest einen Fixieraufnahme (40) vom nächsten axialen Ende (24) der Zapfenverzahnung (21) kleiner als circa die Hälfte, bevorzugt kleiner als circa ein Viertel, als ein Sicherungsabstand (23) der nächsten Sicherungsnut (22) zu diesem axialen Ende (24) der Zapfenverzahnung (21) ist.

7. Längenverstellbare Welle (1) nach einem der vorangegangenen Ansprüche,
**dadurch gekennzeichnet,**
**dass** ein Fixierabstand (41) der zumindest einen Fixieraufnahme (40) vom nächsten axialen Ende (24) der Zapfenverzahnung (21) kleiner als circa 15 mm, bevorzugt kleiner als circa 10 mm, besonders bevorzugt kleiner als circa 5 mm, ist.

8. Längenverstellbare Welle (1) nach einem der vorangegangenen Ansprüche,
**dadurch gekennzeichnet,**
**dass** die zumindest eine Hinterschneidung (25) mit einer Achse (26) des Zapfenabschnitts (20) einen Winkel zwischen circa 30° und circa 45° bildet.

9. Lenkvorrichtung (50) für ein Fahrzeug (60), aufweisend eine längenverstellbare Welle (1),
**dadurch gekennzeichnet,**
**dass** die längenverstellbare Welle (1) nach einem der vorangegangenen Ansprüche ausgebildet ist.

## Claims

1. Adjustable-length shaft (1) for a steering apparatus (50) of a vehicle (60) having a sleeve section (10) and a journal section (20), the sleeve section (10) being configured to at least partially enclose the journal section (20), and it being possible for the sleeve section (10) and the journal section (20) to be displaced axially with respect to one another in order to adjust a length of the shaft (1), the sleeve section (10) having a sleeve spline (11) and the journal section (20) having a journal spline (21), the sleeve spline (11) and the journal spline (21) engaging into one another in order to transmit a torque, and, furthermore, the journal spline (21) being overmoulded with a plastic (30) at least at one axial end (24), the overmoulded plastic (30) being secured against an axial displacement by way of at least one securing groove (22) in the journal spline (21), and the journal spline (21) having at least one fixing receptacle (40), the fixing receptacle (40) being arranged between the at least one securing groove (22) and that axial end (24) of the journal spline (21) which is overmoulded with plastic, and the fixing receptacle (40) being overmoulded with the plastic (30), **characterized in that** the journal spline (21) has an undercut (25) at at least one axial end (24), the at least one undercut (25) being overmoulded with plastic (30) .

2. Adjustable-length shaft (1) according to Claim 1, **characterized in that** the two axial ends (24) of the journal spline (21) are overmoulded with the plastic (30), and **in that** the journal spline (21) has at least two fixing receptacles (40), the fixing receptacles (40) being arranged in each case between the at least one securing groove (22) and one of the axial ends (24) of the journal spline (21) which are overmoulded with plastic, the fixing receptacles (40) being overmoulded with the plastic (30).

3. Adjustable-length shaft (1) according to Claim 1 or 2, **characterized in that** the journal spline (21) has three or more, preferably six, particularly preferably four, fixing receptacles (40).

4. Adjustable-length shaft (1) according to one of the preceding claims, **characterized in that** the at least one fixing receptacle (40) is of circumferential configuration, in particular of groove-like circumferential configuration.

5. Adjustable-length shaft (1) according to one of the preceding claims, **characterized in that** an axial extent of the fixing receptacles (40) is smaller than an axial extent of the at least one securing groove (22) .

6. Adjustable-length shaft (1) according to one of the preceding claims, **characterized in that** a fixing spacing (41) of the at least one fixing receptacle (40) from the closest axial end (24) of the journal spline (21) is smaller than approximately half, preferably smaller than approximately a quarter of, a securing spacing (23) of the closest securing groove (22) from the said axial end (24) of the journal spline (21).

7. Adjustable-length shaft (1) according to one of the preceding claims, **characterized in that** a fixing spacing (41) of the at least one fixing receptacle (40) from the closest axial end (24) of the journal spline (21) is smaller than approximately 15 mm, preferably smaller than approximately 10 mm, particularly preferably smaller than approximately 5 mm.

8. Adjustable-length shaft (1) according to one of the preceding claims, **characterized in that** the at least one undercut (25) forms an angle of between approximately 30° and approximately 45° with an axis (26) of the journal section (20).

9. Steering apparatus (50) for a vehicle (60), having an adjustable-length shaft (1), **characterized in that** the adjustable-length shaft (1) is configured according to one of the preceding claims.

## Revendications

1. Arbre à longueur variable (1) pour un dispositif de direction (50) d'un véhicule (60) avec une partie de douille (10) et une partie de tourillon (20), dans lequel la partie de douille (10) est formée de façon à entourer au moins partiellement la partie de tourillon (20) et la partie de douille (10) et la partie de tourillon (20) peuvent coulisser axialement l'une par rapport à l'autre pour régler une longueur de l'arbre (1), la partie de douille (10) présentant une denture de douille (11) et la partie de tourillon (20) présentant une denture de tourillon (21), dans lequel la denture de douille (11) et la denture de tourillon (2) s'engagent l'une dans l'autre pour la transmission d'un couple, et dans lequel la denture de tourillon (21) est en outre enrobée par projection d'une matière plastique (30) au moins à une extrémité axiale (24), dans lequel la matière plastique projetée (30) est bloquée contre un déplacement axial au moyen d'au moins une rainure de blocage (22) dans la denture de tourillon (21) et la denture de tourillon (21) présente au moins un logement de fixation (40), dans lequel le logement de fixation (40) est disposé entre ladite au moins une rainure de blocage (22) et l'extrémité axiale (24) de la denture de tourillon (21) enrobée de matière plastique et dans lequel le logement de fixation (40) est enrobé de la matière plastique (30), **caractérisé en ce que** la denture de tourillon (21) présente à au moins une extrémité axiale (24) une contre-dépouille (25), dans lequel ladite au moins une contre-dépouille (25) est enrobée de matière plastique par projection (30).

2. Arbre à longueur variable (1) selon la revendication 1, **caractérisé en ce que** les deux extrémités axiales (24) de la denture de tourillon (21) sont enrobées avec la matière plastique par projection (30) et **en ce que** la denture de tourillon (21) présente au moins deux logements de fixation (40), dans lequel les logements de fixation (40) sont disposés respectivement entre ladite au moins une rainure de blocage (22) et une des extrémités axiales (24) enrobées de matière plastique de la denture de tourillon (21), dans lequel les logements de fixation (40) sont enrobés avec la matière plastique (30).

3. Arbre à longueur variable (1) selon la revendication 1 ou 2, **caractérisé en ce que** la denture de tourillon (21) présente trois ou plus, de préférence six, de préférence encore quatre, logements de fixation (40).

4. Arbre à longueur variable (1) selon l'une quelconque des revendications précédentes, **caractérisé en ce que** ledit au moins un logement de fixation (40) est réalisé sous forme périphérique, en particulier sous forme de rainure périphérique.

5. Arbre à longueur variable (1) selon l'une quelconque des revendications précédentes, **caractérisé en ce qu'**une extension axiale des logements de fixation (40) est plus petite qu'une extension axiale de ladite au moins une rainure de blocage (22).

6. Arbre à longueur variable (1) selon l'une quelconque des revendications précédentes, **caractérisé en ce qu'**une distance de fixation (41) dudit au moins un logement de fixation (40) à l'extrémité axiale la plus proche (24) de la denture de tourillon (21) est plus petite qu'environ la moitié, de préférence plus petite qu'environ un quart, qu'une distance de blocage (23) de la rainure de blocage (22) la plus proche de cette extrémité axiale (24) de la denture de tourillon (21).

7. Arbre à longueur variable (1) selon l'une quelconque des revendications précédentes, **caractérisé en ce qu'**une distance de fixation (41) dudit au moins logement de fixation (40) à l'extrémité axiale la plus proche (24) de la denture de tourillon (21) est plus petite qu'environ 15 mm, de préférence plus petite qu'environ 10 mm, et de préférence encore plus petite qu'environ 5 mm.

8. Arbre à longueur variable (1) selon l'une quelconque des revendications précédentes, **caractérisé en ce que** ladite au moins une contre-dépouille (25) forme avec un axe (26) de la partie de tourillon (20) un angle compris entre environ 30° et environ 45°.

9. Dispositif de direction (50) pour un véhicule (60), présentant un arbre à longueur variable (1), **caractérisé en ce que** l'arbre à longueur variable (1) est réalisé selon l'une quelconque des revendications précédentes.
